# EUROPEAN PATENT APPLICATION

(11) **EP 1 737 236 A2**
(43) Date of publication of application: **27.12.2006**
(21) Application number: 05720042.0
(22) Date of filing: 04.03.2005
(51) Int. Cl.: H04N 7/16

(54) **VIEW CONTROL SYSTEM AND VIEW CONTROL METHOD**

(30) Priority: 04.03.2004 JP 2004060601
(71) Applicant: NIPPON TELEVISION NETWORK CORPORATION, Tokyo 105-7444 (JP); WASEDA UNIVERSITY, Shinjuku-ku, Tokyo 169-8050 (JP)
(72) Inventor: MIYABAYASHI, Satoshi, c/o Nippon Tele NetworkCorp, Tokyo 1057444 (JP); URANO, Joji, c/o Nippon Television Network Corp., Tokyo 1057444 (JP); DOI, Kiyoyuki, c/o Nippon Television Network Corp., Tokyo 1057444 (JP); KATO, Tomonori, c/o Nippon Television Network Corp, Tokyo 1057444 (JP); KAMEYAMA, Wataru, c/o Waseda University, Tokyo 1698050 (JP); DAIKOKU, Taihei, c/o Waseda University, Tokyo 1698050 (JP); HOSONO, Kazuki, c/o Waseda University, Tokyo 1698050 (JP); SEKI, Akiko, c/o Waseda University, Tokyo 1698050 (JP)
(74) Representative: Vossius & Partner
(86) International application number: PCT/JP2005/003770
(87) International publication number: WO 2005/084140

(57) **Abstract**

A view controller for controlling view is described on meta data and a view history (log) of a viewer recorded at the reception side is used to judge whether the condition of the view controller is satisfied. When the condition is satisfied, the view of the received content is permitted. Moreover, the view controller controls not only the view history (log) of the viewer stored before the content is received but also the view of another content during or after the content view. Thus, it is possible to perform view control to enforce the content right information and reflect the intention of the content creator.

## Description

### [APPLICABLE FIELD IN THE INDUSTRY]

The present invention relates to a technology of a view control, and more particularly, to a technology of a view control for realizing an offer of contents profitable for both of a viewer and a contents provider.

### [BACKGROUND ART]

Recently, as a television broadcast has been digitalized, an accumulation-type receiver utilizing a hard disc that has a large capacity and yet is low-priced is expected to prevail. Prevalence thereof brings about the possibility that anybody can view the contents irrespectively of time and location.

Remarkable freedom of viewing the contents yields a great merit for the viewer; however there also exists the possibility that an intention of a contents producing side is not always reflected.

On the other hand, as a technique of a metadata for describing rights information of the contents, there exists an XrML (extensible rights Markup Language: see non-patent document 1).
Non-patent document 1: Internet
<URL://http://www.xrml.org>

### [DISCLOSURE OF THE INVENTION]

### [PROBLEMS TO BE SOLVED BY THE INVENTION]

The foregoing XrML, which is for describing rights information of the contents, is not a language that allows such a view control of reflecting an intention of the contents producing side to be taken.

Thereupon, the present invention has been accomplished in consideration of the above-mentioned problem, and an object thereof is to provide a technology capable of taking the view control such that rights information of the contents is reinforced and an intention of the contents producing side is reflected.

### [MEANS TO SOLVE THE PROBLEM]

The first invention for solving the above-mentioned problem, which is a view control system, is characterized in including:
a log recording means for recording a log of an viewer;
a sending-out means for sending out a view-controller for controlling viewing of contents based upon the log of the viewer; and
a view controlling means for controlling viewing of the contents based upon the view-controller and the recorded log.

The second invention for solving the above-mentioned problem is characterized in that, in the above-mentioned first invention, the view-controller has controlling conditions and controlling details, which are applied until a start time point of viewing the contents, described.

The third invention for solving the above-mentioned problem is characterized in that, in one of the above-mentioned first and second inventions, the view-controller has viewing conditions, which are applied after viewing the contents, described.
The fourth invention for solving the above-mentioned problem is characterized in that, in one of the above-mentioned first to third inventions, the view-controller has controlling conditions and controlling details, which are applied while a program of the contents is viewed, described.

The fifth invention for solving the above-mentioned problem is characterized in that, in one of the above-mentioned first to fourth inventions:
the view-controller is a controller for permitting or restraining the viewing of the contents in a case where a predetermined condition was satisfied at least one time before viewing the contents; and
the view controlling means is configured to detect the log satisfying the predetermined condition from among the recorded logs based upon the view-controller and to permit the viewing of the contents in a case where a predetermined log has been detected.

The sixth invention for solving the above-mentioned problem is characterized in that, in one of the above-mentioned first to fifth inventions:
the view-controller is a controller for permitting or restraining the viewing of the contents in a case where a predetermined condition is satisfied whenever the contents are viewed; and
the view controlling means is configured to detect the log satisfying the predetermined condition from among the recorded logs based upon the view-controller and to permit or restrain the viewing of the contents in a case where a predetermined log has been detected.

The seventh invention for solving the above-mentioned problem is characterized in that, in one of the above-mentioned first to sixth inventions:
the view-controller is a controller for allowing a log of a predetermined permission or restraint to be recorded after viewing the contents; and
the view controlling means is configured to record the log of the predetermined permission or restraint based upon the view-controller after viewing the contents.

The eighth invention for solving the above-mentioned problem is characterized in that, in one of the above-mentioned first to seventh inventions:
the view-controller is a controller for giving permission of, or restraint to a predetermined matter while the contents are viewed; and
the view controlling means is configured to give permission of, or restraint to a predetermined matter based upon the view-controller while the contents are viewed.

The ninth invention for solving the above-mentioned problem is characterized in, in one of the above-mentioned first to eighth inventions:
the view-controller is a controller for replacing a condition at the time of an initial setting with the other condition; and
the view controlling means is configured to detect the log satisfying the other condition, which replaces the condition at the time of an initial setting, based upon the view-controller and to permit the viewing of the contents in a case where its log has been detected.

The tenth invention for solving the above-mentioned problem is characterized in, in one of the above-mentioned first to ninth inventions, including:
a means for sending out a log record-controller for allowing a specific log to be recorded; and
a log recording means for recording the log of the viewer based upon the log record-controller.

The eleventh invention for solving the above-mentioned problem, which is a view control method, is characterized in including the steps of:
recording a log of an viewer in a receiver side;
sending out a view-controller for controlling viewing of contents to a receiver based upon the log of the viewer; and
controlling the viewing of the contents based upon the view-controller and the recorded log in the receiver side.

The twelfth invention for solving the above-mentioned problem is characterized in that, in the above-mentioned eleventh invention, the view-controller has controlling conditions and controlling details, which are applied until a start time point of viewing the contents, described.

The thirteenth invention for solving the above-mentioned problem is characterized in that, in one of the above-mentioned eleventh to twelfth inventions, the view-controller has viewing conditions, which are applied after viewing the contents, described.

The fourteenth invention for solving the above-mentioned problem is characterized in that, in one of the above-mentioned eleventh to thirteenth inventions, the view-controller has controlling conditions and control details, which are applied while a program of the contents is viewed, described.

The fifteenth invention for solving the above-mentioned problem is characterized in that, in one of the above-mentioned eleventh to fourteen inventions:
the view-controller is a controller for permitting or restraining the viewing of the contents in a case where a predetermined condition was satisfied at least one time before viewing the contents; and
the view control method includes a step of, in the receiver side, detecting the log satisfying the predetermined condition from among the recorded logs based upon the view-controller to permit the viewing of the contents in a case where a predetermined log has been detected.

The sixteenth invention for solving the above-mentioned problem is characterized in that, in one of the above-mentioned eleventh to fifteenth inventions:
the view-controller is a controller for permitting or restraining the viewing of the contents in a case where a predetermined condition is satisfied whenever the contents are viewed; and
the view control method includes a step of, in the receiver side, detecting the log satisfying the predetermined condition from among the recorded logs based upon the view-controller to permit or restrain the viewing of the contents in a case where a predetermined log has been detected.

The seventeenth invention for solving the above-mentioned problem is characterized in that, in one of the above-mentioned eleventh to sixteenth inventions:
the view-controller is a controller for allowing a log of a predetermined permission or restraint to be recorded after viewing the contents; and
the view control method includes a step of, in the receiver side, recording the log of the predetermined permission or restraint based upon the view-controller after viewing the contents.

The eighteenth invention for solving the above-mentioned problem is characterized in that, in one of the above-mentioned eleventh to seventeenth inventions:
the view-controller is a controller for giving permission of, or restraint to a predetermined matter while the contents are viewed; and
the view control method includes a step of, in the receiver side, giving permission of, or restraint to a predetermined matter based upon the view-controller while the contents are viewed.

The nineteenth invention for solving the above-mentioned problem is characterized in that, in one of the above-mentioned eleventh to eighteenth inventions:
the view-controller is a controller for replacing a condition at the time of an initial setting with the other condition; and
the view control method includes a step of, in the receiver side, detecting the log satisfying the other condition, which replaces the condition at the time of an initial setting, based upon the view-controller to permit the viewing of the contents in a case where its log has been detected.

The twentieth invention for solving the above-mentioned problem is characterized in, in one of the above-mentioned eleventh to nineteenth inventions, including the steps of:
sending out a log record-controller for allowing a specific log to be recorded to the receiver; and
recording the log of the viewer based upon the log record-controller in the receiver side.

### [EFFECTS OF THE INVENTION]

The present invention makes it possible to take the view control such that an intention of the contents producing side is reflected.

### [BRIEF DESCRIPTION OF THE DRAWINGS]

[Fig. 1] Fig. 1 is a block diagram of an embodiment 1.
[Fig. 2] Fig. 2 is a block diagram of a broadcast station 1.
[Fig. 3] Fig. 3 is a view for explaining the view-controller.
[Fig. 4] Fig. 4 is a block diagram of a receiver 2.
[Fig. 5] Fig. 5 is an operational flowchart of the embodiment 1.

### [DESCRIPTION OF NUMERALS]

- 1: broadcast station
- 2: receiver
- 10: controller generator
- 11: synthesizer
- 12: transmitting facilities
- 20: receiving section
- 21: view-controller decryptor
- 22: log recorder
- 23: view controlling section
- 24: display

### [BEST MODE FOR CARRYING OUT THE INVENTION]

The view control in accordance with the present invention is for describing a view-controller for controlling the viewing in a metadata to determine whether or not the condition of this view-controller is met by employing a viewer's viewing history (log) recorded in the receiver side. And, the view control is for permitting the viewing of the received contents if the condition is satisfied.

In addition hereto, the view-controller is not only for administrating the viewer' viewing history (log) stored before receiving the contents, but also for taking the control such that while the contents are viewed or after viewing the contents, the other contents are viewed.

For example, an accumulating device having a large capacity exists in the receiver side, where the program and the metadata including the view-controller that are delivered via broadcast or communication are accumulated. And, the accumulating device or the receiving section administers the program and the metadata delivered via broadcast or communication. At the time of viewing, the view-controller decryptor reads out the view-controller from the accumulated metadata for decryption, and the view controlling section executes the view control based upon its result.

Hereinafter, a specific embodiment will be explained.

### [Embodiment 1]

The embodiment 1 of the present invention will be explained.

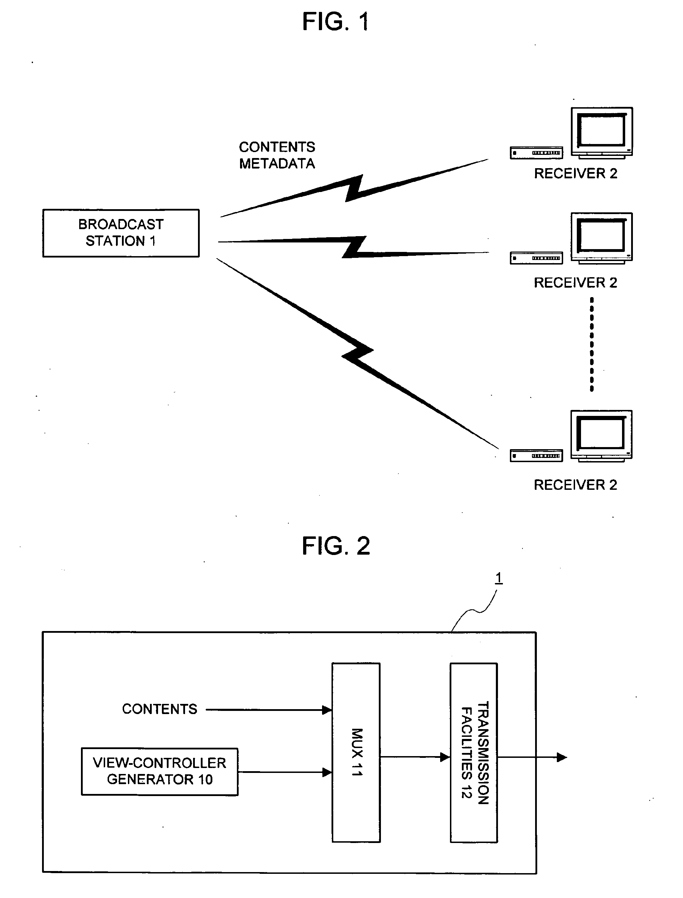

Fig. 1 is a block diagram of the embodiment 1.

In Fig. 1, 1 is a broadcast station, and 2 is a receiver.

Fig. 2 is a block diagram of the broadcast station 1.

In Fig. 2, 10 is a controller generator for generating a log record-controller for allowing the log such as the viewing history of the viewer in the receiver 2 side to be recorded, and a view-controller for controlling regeneration in the receiver 2.

Herein, the log record-controller and the view-controller will be explained.

At first, the log record-controller will be explained.

The log record-controller, which is for allowing the log such as the viewing history of the viewer in the receiver 2 side to be recorded, is, for example, for allowing the receiver 2 side to record information for specifying the viewed object such as a program viewed by the viewer and a commercial. Identification information etc. such as a date of the viewing and the viewed program is listed as information of this kind. Additionally, this log record controller, which is not an indispensable component of the present invention, is not always required if a function exists in the receiver 2 side of automatically recording the viewing history of the contents.

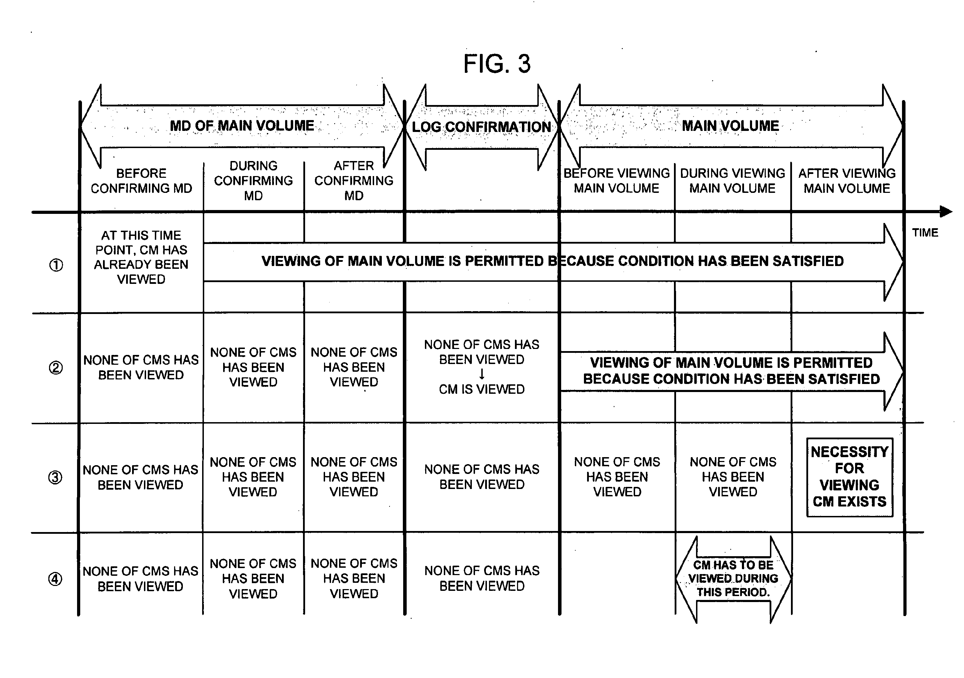

Continuously, the view-controller will be explained by employing Fig. 3. Additionally, in Fig. 3, MD signifies a metadata, and CM signifies a commercial.

The view-controller is a view-controller for controlling the viewing in the receiver 2, and there exist the following view-controllers.

(1) A view-controller for taking the view control such that X is permitted if A is satisfied (hereinafter, referred to as a first Pre-Condition).
This view-controller is a controller for permitting regeneration in a case where the condition designated in the metadata has already been executed and the condition is satisfied before confirming the metadata having the condition described.

For example, upon assuming that A is a commercial and X is a main volume of the program, as shown in 1 of Fig. 3, the condition of the metadata is confirmed and the regeneration of the main volume of the program is permitted if the viewing of a specific commercial has been recorded in the log.

(2) A view-controller for taking the view control such that X is permitted if A is executed (hereinafter, referred to as a second Pre-Condition).
This view-controller is for, for example, issuing to the viewer the message such that this main volume can be viewed only if this condition is satisfied in a case the condition described in the metadata has not been satisfied at the stage of the viewing by the viewer, i.e. there is no record about it in the log, thereby making it possible to take an action, which is to be permitted on the premise that the condition is satisfied, if the viewer satisfies the condition according hereto.

For example, upon assuming that A is a commercial and X is a main volume of the program, as shown in 2 of Fig. 3, the condition of viewing the commercial has not been satisfied at the stage of confirming the condition of the metadata, and when the commercial is viewed after submitting the message, the regeneration of the main volume is permitted.

Additionally, each of the foregoing controllers (PreConditions) of (1) and (2) is a controller for designating the controlling conditions and the controlling details that are applied until a start time point of the viewing.

(3) A view-controller for taking the view control such that X can be executed if A is executed, or A has to be executed (hereinafter, referred to as a Post-Condition).
This view-controller is a view-controller for taking the view control such that the action such as the regeneration can be executed ahead; however the condition described in the metadata has to be satisfied or can be satisfied after executing the action.

For example, upon assuming that A is a main volume of the program and X is a promise of answering a questionnaire after viewing the main volume, the viewing of the main volume is permitted; however the questionnaire has to be answered thereafter.

Further, for example, upon assuming that A is a main volume of the program and X is a promise of viewing the commercial after viewing the main volume, as shown in 3 of Fig. 3, the viewing of the main volume is permitted; however the commercial has to be viewed thereafter.

Additionally, the foregoing controller (Post-Condition) of (3) is a controller for designating the viewing condition that is applied after viewing the program.

(4) A view-controller for taking the view control such that B can be executed, or has to be executed while X is executed (hereinafter, referred to as an on-Process-Condition).
This view-controller is a controller for taking the view control such that the condition has to be satisfied or can be satisfied while the action is executed.

For example, upon assuming that X is a main volume of the program and B is a special homepage of the main volume, it follows that the special homepage of the main volume can be viewed only while the main volume is viewed, or the special homepage of the main volume has to be viewed while the main volume is viewed.

Further, for example, upon assuming that X is a main volume of the program and B is an obligation of viewing the commercial, as shown in 4 of Fig. 3, it follows that the commercial has to be viewed while the main volume is viewed.

Additionally, the foregoing controller (on-Process Condition) of (4) is a controller for designating the controlling conditions and the controlling details that are applied while the program is viewed.

(5) A view-controller for taking the view control such that X is permitted if A or A' is executed.
This controller is a view-controller for taking the view control such that X is permitted if A is executed, or alternatively if A' is executed instead of this A. For example, upon assuming that A is a commercial 1, A' is a commercial 2, and X is a main volume of the program, this controller is for taking the view control such that the viewing of the main volume of the program is permitted if the commercial 2 has been viewed even though the commercial 1 has not been viewed.

As a matter of course, these controllers mentioned above may be employed separately, and in addition hereto, a combination thereof may be used.

11 is a synthesizer. This synthesizer 11 is for synthesizing the contents such as a video/voice stream encoded by MPEG 2 etc., and the controller generated in the view-controller generator 10. Specifically, it is for adding the view-controller or the log-controller to the metadata of the contents.

12, which is transmission facilities, is for transmitting the contents to which the metadata having the controller described has been added to the receiver 2.

Next, the receiver 2 will be explained.

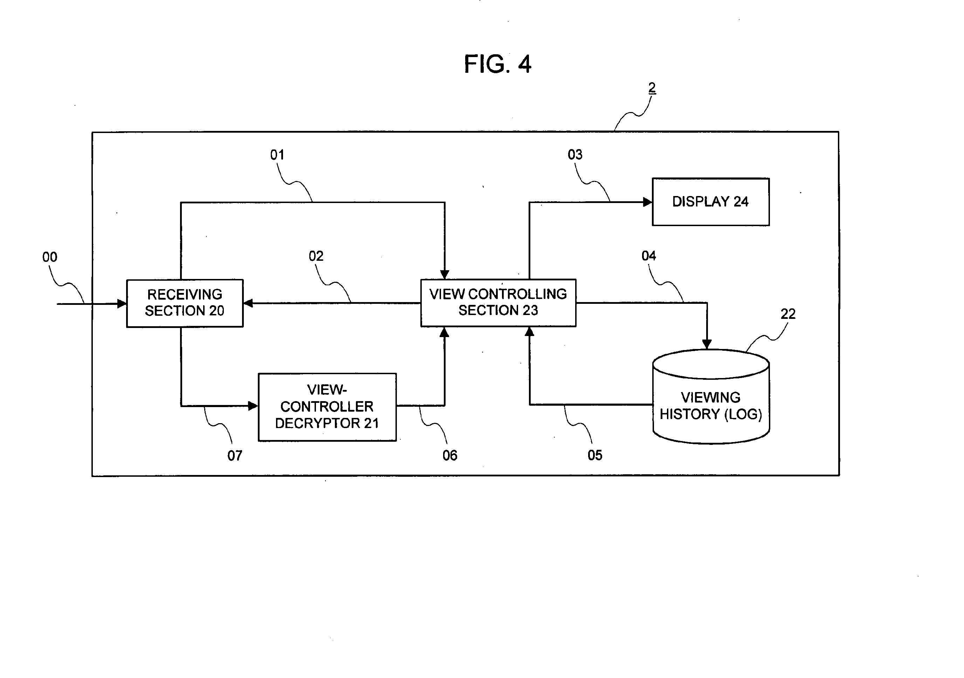

Fig. 4 is a block diagram of the receiver 2.

In Fig. 4, 20 is a receiving section for receiving the contents with the metadata having the view-controller described.

21 is a view-controller decryptor. The view-controller decryptor 12 is for decrypting the view-controller from the metadata of the contents.

22 is a log recorder. This log recorder 22 is a recorder in which the viewing history (log) of the contents is recorded. A data of the viewing and identification information (for example, a program, a commercial name, an identification code, etc.) for specifying the viewed contents are listed as the viewing history.

23 is a view controlling section. This view controlling section 23 is for receiving the details of the view-controller decrypted by the view-controller decryptor 21 to control the viewing of the contents. Specifically, for example, the view controlling section 23 determines whether the condition of the view-controller is satisfied from the viewing history recorded in the log recorder 22, and if the condition is satisfied, it regenerates the contents. Further, the view controlling section 23 records the viewing history of the commercial and the contents into the log recorder 22.

24 is a display in which the contents (video/voice) view-controlled by the view controlling section 23 are displayed/output.

Next, an operation will be explained by employing a specific example in the foregoing configuration.

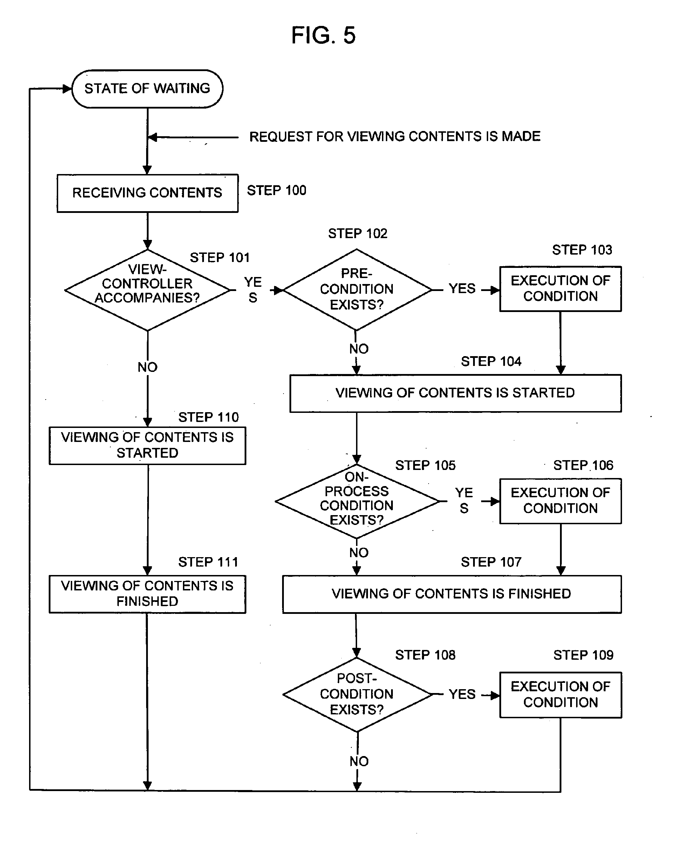

Fig. 5 is an operational flowchart of the embodiment 1.

Additionally, in the following explanation of the operation, it is assumed that the Pre-Condition, On-Process-Condition, and the Post-condition are included in the view-controller as an option, respectively. Further, it is assumed that each Condition has the execution of a certain condition described. For example, the log recording condition of, as an alternation condition for viewing certain contents, assuming that the viewing of the above contents has been started/finished, the viewing condition that so as to view the above contents, certain designated contents have to be viewed in advance, the permission for executing a certain specific process that is permitted only while the above contents are viewed, and so on are listed.

At first, in the receiver 2 that is in a state of waiting, when a viewing request is made, the reception of the contents is started (Step 100). In a case where the view-controller has been described in the metadata of the contents (Step 101), the view control is taken based upon the viewing condition of its view-controller.

In a case where the view-controller is the Pre-Condition (Step 102), the viewing history (log) recorded in the log recorder 22 is confirmed (Step 103), and in a case where there exists the viewing history meeting the condition (the log of having viewed the contents meeting the condition in the past), the viewing of the received contents is started (Step 104).

In a case where the view-controller is not the Pre-Condition (Step 102), the viewing of the received contents is started (Step 104). And, in a case where the view-controller is the On-Process-Condition (Step 105), the viewer executes the described condition while the contents are viewed (Step 106), and thereafter, the viewing of the contents is finished (Step 107).

In a case where the view-controller is the Post-Condition (Step 108), the viewer executes the condition described in the metadata after finishing the viewing of the contents (Step 109), and thereafter, the operation returns to the state of waiting.

On the other hand, in a case where the view-controller is not described in the metadata of the contents (Step 101), as a general rule, the viewing of the contents is started (Step 110), and then, the viewing of the contents is finished (Step 111).

Additionally, herein, with regard to the normal log records such as the start time and the finish time of the viewing of the contents, irrespectively of the existence of the view-controller, the start of the contents viewing is recorded as a log with the start process of viewing the contents in the figure, and the finish of the contents viewing is recorded as a log with the finish process of viewing the contents, respectively. For this, even though the contents having no view-controller affixed was viewed, the fact that the viewing was made is recorded, thereby enabling the contents-view control to be realized without inconsistency even though the pre-viewing of the contents having has no view control descriptor affixed is set as a condition in the contents having a view control descriptor affixed.

Continuously, a specific flow of information will be explained based upon the foregoing operational flow.

Additionally, as a process example, three of the case (1) where contents B can be viewed because contents A were viewed in the past, the case (2) where contents C have to be viewed because the viewing of contents B have been just finished, and the case (3) where contents D are viewed as an alternation for viewing the contents A will be explained.

(1) The case where the contents B can be viewed because the contents A were viewed in the past (the case where the controller is the Pre-Condition)
The contents B of which the viewing is desired, and the view-controller accompanying it are received via a signal line 00 in the receiving section 20. The view-controller is sent to the view-controller decryptor 21 via a signal line 07, in which its details are decrypted. Herein, it is assumed that it is described as a request condition in the view-controller that the contents A have to be viewed beforehand so as to view the contents B.

The decryption result is sent to the view controlling section 23 via a signal line 06. The view controlling section 23 inquires of the log recorder 22 via a signal line 04 whether the contents A were viewed in the past. The inquiry result is sent back to the view controlling section 23 via a signal line 05. Herein, the view controlling section 23 does not permit to view the contents B unless the contents A have been viewed. On the other hand, if the contents A have been viewed, the view controlling section 23 permits to view the contents B, and requests the receiving section via a signal line 02 to send the contents B to the view controlling section 23.

The requested contents B are sent to the view controlling section 23 via a signal line 01, and the view controlling section 23 delivers its signal to the display 24. At this moment, the view controlling section 23 sends the log recorder 22 the fact that the viewing of the contents B was started via a signal line 04, and records its fact. Further, if the viewing of the contents B is finished, the view controlling section 23 sends its record to the log recorder 22 via the signal line 4, and records it.

(2) The case where the contents C have to be viewed because the viewing of the contents B has been just finished (the case where the controller is the Post-Condition)
The contents B of which the viewing is desired, and the view-controller accompanying it are received via the signal line 00 in the receiving section 20. The view-controller is sent to the view-controller decryptor 21 via the signal line 07, in which its details are decrypted. Herein, it is assumed that it is described as a request condition in the view-controller that the contents C have to be viewed surely in a case where the viewing of the contents B is finished. The decryption result is sent to the view controlling section 23 via the signal line 06. The view controlling section 23 requests the receiving section 20 via the signal line 02 to send the contents B to the view controlling section 23. The requested contents B are sent to the view controlling section 23 via the signal line 01, and the view controlling section 23 delivers its signal to the display 24. At this moment, the view controlling section 23 sends the log recorder 22 the fact that the viewing of the contents B was started via the signal line 04, and records its fact.

Further, if the viewing of the contents B is finished, the view controlling section 23 sends its fact to the log recorder 22 via the signal line 04, and records it. Simultaneously, the view controlling section 23 understands that viewing the contents C is a condition, whereby it gives the receiving section 20 a command for sending the contents C via the signal line 02, and the requested contents C are sent via the signal line 01 to the view controlling section 23, and furthermore are sent to the display 24. At the moment that the contents C are being displayed, the view controlling section 23 controls the entirety of the receiver 2, and never permits the viewer to operate the receiver. For example, the following can be listed: the viewer cannot switch off an electric power switch, the viewer cannot change a channel, and so on. Thereby, the request condition of the view-controller accompanying the contents B that the contents C have to be viewed under compulsion is satisfied.

(3) The case where the contents D are viewed as an alternation for viewing the contents A
The contents A of which the viewing is desired, and the view-controller accompanying it are received via the signal line 00 in the receiving section 20. The view-controller is sent to the view-controller decryptor 21 via the signal line 07, in which its details are decrypted. Herein, it is assumed that it is described in the view-controller that the contents D may be viewed instead of viewing the contents A. The decryption result is sent to the view controlling section 23 via the signal line 06.

When the view controlling section 23 judges that the contents D are preferably viewed instead of the contents A, it requests the contents D of the receiving section 20 via the signal line 02. As an example of making such a judgment, the case where the contents D suits a viewer's taste more positively, the case where a certain condition of the receiver designates that the contents D should be displayed, and so on are listed. The requested contents D are sent to the view controlling section 23 via the signal line 01, and furthermore are sent to the display 24.

The view controlling section 23 notifies the log recorder 22 of the fact that the viewing of the contents D was started via the signal line 04.

At this moment, the view controlling section 23 records the fact that the contents D is being viewed, which is an identical condition to the viewing of the contents A. Further, also in a case where the viewing of the contents D has been finished, it records its fact in the log recorder 22 via the signal line 04. As a result of such a series of operations, for example, in a case where view-controller information that the contents A have to be viewed in order to receive the contents B in the receiving section 20 and to view the contents B is accompanied, the record that the contents D, being equivalent to the contents A, were viewed can be obtained from the log recorder 22 notwithstanding the fact that the contents A were not viewed actually, whereby the function that the contents B can be viewed without viewing the contents A can be realized on the basis of the fact that the contents D were viewed.

## Claims

1. A view control system, **characterized in** including:
a log recording means for recording a log of an viewer;
a sending-out means for sending out a view-controller for controlling viewing of contents based upon said log of said viewer; and
a view controlling means for controlling viewing of the contents based upon said view-controller and said recorded log.

2. The view control system according to claim 1, **characterized in that** the view-controller has controlling conditions and controlling details described, said controlling conditions and controlling details being applied until a start time point of viewing the contents.

3. The view control system according to one of claim 1 and claim 2, **characterized in that** the view-controller has viewing conditions described, said viewing conditions being applied after viewing the contents.

4. The view control system according to one of claim 1 to claim 3, **characterized in that** the view-controller has controlling conditions and controlling details described, said controlling conditions and controlling details being applied while a program of the contents is viewed.

5. The view control system according to one of claim 1 to claim 4, **characterized in that**:
the view-controller is a controller for permitting or restraining the viewing of the contents in a case where a predetermined condition was satisfied at least one time before viewing the contents; and
the view controlling means is configured to detect the log satisfying said predetermined condition from among the recorded logs based upon said view-controller and to permit the viewing of the contents in a case where a predetermined log has been detected.

6. The view control system according to one of claim 1 to claim 5, **characterized in that**:
the view-controller is a controller for permitting or restraining the viewing of the contents in a case where a predetermined condition is satisfied whenever the contents are viewed; and
the view controlling means is configured to detect the log satisfying said predetermined condition from among the recorded logs based upon said view-controller and to permit or restrain the viewing of the contents in a case where a predetermined log has been detected.

7. The view control system according to one of claim 1 to claim 6, **characterized in that**:
the view-controller is a controller for allowing a log of a predetermined permission or restraint to be recorded after viewing the contents; and
the view controlling means is configured to record said log of said predetermined permission or restraint based upon said view-controller after viewing the contents.

8. The view control system according to one of claim 1 to claim 7, **characterized in that**:
the view-controller is a controller for giving permission of, or restraint to a predetermined matter while the contents are viewed; and
the view controlling means is configured to give permission of, or restraint to a predetermined matter based upon said.view-controller while the contents are viewed.

9. The view control system according to one of claim 1 to claim 8, **characterized in that**:
the view-controller is a controller for replacing a condition at the time of an initial setting with the other condition; and
the view controlling means is configured to detect the log satisfying the other condition, which replaces the condition at the time of an initial setting, based upon said view-controller and to permit the viewing of the contents in a case where its log has been detected.

10. The view control system according to one of claim 1 to claim 9, **characterized in** including:
a means for sending out a log record-controller for allowing a specific log to be recorded; and
a log recording means for recording the log of the viewer based upon said log record-controller.

11. A view control method, **characterized in** including the steps of:
recording a log of an viewer in a receiver side;
sending out a view-controller for controlling viewing of contents to a receiver based upon said log of said viewer; and
controlling the viewing of the contents based upon said view-controller and said recorded log in the receiver side.

12. The view control method according to claim 11, **characterized in** the view-controller has controlling conditions and controlling details described, said controlling conditions and controlling details being applied until a start time point of viewing the contents.

13. The view control method according to one of claim 11 and claim 12, **characterized in that** the view-controller has viewing conditions described, said viewing conditions being applied after viewing the contents.

14. The view control method according to one of claim 11 to claim 13, **characterized in that** the view-controller has controlling conditions and controlling details described, said controlling conditions and controlling details being applied while a program of the contents is viewed.

15. The view control method according to one of claim 11 to claim 14, **characterized in that**:
the view-controller is a controller for permitting or restraining the viewing of the contents in a case where a predetermined condition was satisfied at least one time before viewing the contents; and
the view control method includes a step of, in the receiver side, detecting the log satisfying said predetermined condition from among the recorded logs based upon said view-controller to permit the viewing of the contents in a case where a predetermined log has been detected.

16. The view control method according to one of claim 11 to claim 15, **characterized in that**:
the view-controller is a controller for permitting or restraining the viewing of the contents in a case where a predetermined condition is satisfied whenever the contents are viewed; and
the view control method includes a step of, in the receiver side, detecting the log satisfying said predetermined condition from among the recorded logs based upon said view-controller to permit or restrain the viewing of the contents in a case where a predetermined log has been detected.

17. The view control method according to one of claim 11 to claim 16, **characterized in that**:
the view-controller is a controller for allowing a log of a predetermined permission or restraint to be recorded after viewing the contents; and
the view control method includes a step of, in the receiver side, recording said log of said predetermined permission or restraint based upon said view-controller after viewing the contents.

18. The view control method according to one of claim 11 to claim 17, **characterized in that**:
the view-controller is a controller for giving permission of, or restraint to a predetermined matter while the contents are viewed; and
the view control method includes a step of, in the receiver side, giving permission of, or restraint to a predetermined matter based upon said view-controller while the contents are viewed.

19. The view control method according to one of claim 11 to claim 18, **characterized in that**:
the view-controller is a controller for replacing a condition at the time of an initial setting with the other condition; and
the view control method includes a step of, in the receiver side, detecting the log satisfying the other condition, which replaces the condition at the time of an initial setting, based upon said view-controller to permit the viewing of the contents in a case where its log has been detected.

20. The view control method according to one of claim 11 to claim 19, **characterized in** including the steps of:
sending out a log record-controller for allowing a specific log to be recorded to the receiver; and
recording the log of the viewer based upon said log record-controller in the receiver side.
